(19) Europäisches Patentamt
European Patent Office
Office européen des brevets

(11) **EP 4 545 294 A1**

(12) **EUROPEAN PATENT APPLICATION**
published in accordance with Art. 153(4) EPC

(43) Date of publication:
**30.04.2025  Bulletin 2025/18**

(21) Application number: **23827263.7**

(22) Date of filing: **22.06.2023**

(51) International Patent Classification (IPC):
**B32B 27/00** (2006.01)     **E04F 15/02** (2006.01)

(52) Cooperative Patent Classification (CPC):
**B32B 27/00; E04F 15/02**

(86) International application number:
**PCT/JP2023/023146**

(87) International publication number:
**WO 2023/249081 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022  JP 2022102031**

(71) Applicant: **Toppan Holdings Inc.
Tokyo 110-0016 (JP)**

(72) Inventor: **AKUTSU, Erika
Tokyo 110-0016 (JP)**

(74) Representative: **TBK
Bavariaring 4-6
80336 München (DE)**

(54) **DECORATIVE SHEET**

(57)    There is provided a decorative sheet that gives a smooth texture. A decorative sheet (1) includes a primary film layer (2) and a surface protective layer (5) disposed on one surface of the primary film layer (2), in which an uneven structure including a plurality of ridged portions protruding in a ridged shape is disposed on a surface of the surface protective layer (5), and the uneven structure of the surface protective layer (5) has a projection peak height Rpk of less than 3.5 μm.

FIG.1

EP 4 545 294 A1

**Description**

[Technical Field]

The present invention relates to a decorative sheet.

[Background Art]

A decorative sheet is used for, for example, surface decoration of interior and exterior finishes such as fittings, furniture, construction materials, and floor materials for a purpose of imparting designability and durability. In general, decorative sheets are widely used as decorative plates to be adhered to surfaces of substrates such as wood materials, wood boards, metal plates, nonflammable boards, paper substrates, and resin substrates via adhesive agents or the like.

Designability is imparted by, for example, forming patterns such as wood grain patterns and stone grain patterns using various printing methods. Plain decorative sheets without patterns are sometimes preferred. The presence or absence of patterns and the types of patterns are variously selected depending on uses and preferences.

Surface gloss is also important for designability of decorative sheets. Various decorative sheets in a range from one having a high, mirror-like gloss to one having a low gloss causing no reflection may be selected depending on uses and preferences.

Another important function of decorative sheets in addition to imparting designability is imparting durability, as described above. Durability is determined by comprehensively evaluating scratch resistance, contamination resistance, and whether they are continuously ensured for a long period of time. Although requirements differ depending on environments and situations in which decorative sheets are used, a decorative sheet always having high performance is required.

Durability is typically imparted by forming a surface protective layer on the outermost surface of a decorative sheet. For adjusting the above-mentioned gloss, in particular, for achieving a low gloss, a matting agent (matting additive) is typically added to the surface protective layer.

In addition, decorative sheets are typically subjected to processes such as cutting and bending in order to form decorative materials such as a decorative plate, and therefore preferably have processability capable of withstanding these processes.

An example of such decorative sheets obtained in consideration of designability (low gloss), scratch resistance, and contamination resistance is a decorative sheet disclosed in PTL 1.

[Citation List]

[Patent Literature]

[PTL 1] JP 2019-119138 A

[Summary of the Invention]

An object of the present invention is to provide a decorative sheet that gives a smooth texture.

According to one aspect of the present invention, there is provided a decorative sheet including a primary film layer and a surface protective layer disposed on one surface of the primary film layer, in which an uneven structure including a plurality of ridged portions protruding in a ridged shape is disposed on a surface of the surface protective layer, and the uneven structure of the surface protective layer has a projection peak height Rpk of less than 3.5 $\mu$m.

According to another aspect of the present invention, there is provided the decorative sheet according to the above-described aspect, in which the projection peak height Rpk is 0.5 $\mu$m or more.

According to further another aspect of the present invention, there is provided the decorative sheet according to any of the above-described aspects in which in the uneven structure of the surface protective layer, the average length RSm of roughness curve elements is 800 $\mu$m or less.

According to further another aspect of the present invention, there is provided the decorative sheet according to the above-described aspect, in which the average length RSm is 10 $\mu$m or more.

According to further another aspect of the present invention, there is provided the decorative sheet according to any of the above-described aspects, in which the surface protective layer has a thickness of 2 $\mu$m or more and less than 10 $\mu$m.

According to further another aspect of the present invention, there is provided the decorative sheet according to any of the above-described aspects, in which the surface protective layer has a gloss level of 10.0 or less.

According to further another aspect of the present invention, there is provided the decorative sheet according to any of the above-described aspects, in which the plurality of ridge-shaped portions are at least partly adjacent to each other in a width direction, and a cross section parallel to the width direction and a thickness direction of the surface protective layer in a position where the plurality of ridge-shaped portions are at least partly adjacent to each other in the width direction have a sinusoidal wave shape in a portion where the uneven structure is disposed.

According to further another aspect of the present invention, there is provided the decorative sheet according to any of the above-described aspects, in which the surface protective layer contains a cured product of an ionizing radiation-curable resin.

According to further another aspect of the present invention, there is provided the decorative sheet according to the above-described aspect, in which the ionizing radiation-curable resin includes as a main component an acrylate containing a repeating structure, the repeating structure is any of ethylene oxide, propylene oxide, and ε-caprolactone, and the number of repetitions of the repeating structure is 3 or more.

According to further another aspect of the present invention, there is provided a decorative material including the decorative sheet according to any of the above-described aspects and a substrate to which the decorative sheet is adhered.

According to the present invention, there can be provided a decorative sheet that give a smooth texture.

[Brief Description of the Drawings]

Fig. 1 is a cross-sectional view of a decorative material containing a decorative sheet according to an embodiment of the present invention.

Fig. 2 is a cross-sectional view of a surface protective layer contained in the decorative sheet of Fig. 1.

Fig. 3 is a microscope image of a surface protective layer contained in a decorative sheet according to an example of the present invention.

[Description of the Embodiments]

Embodiments of the present invention will be described with reference to the drawings. Embodiments described below embody any of the above-described aspects. One or a combination of the below-described matters can be incorporated into each of the above-described aspects.

Embodiments escribed below are merely examples of a configuration for embodying the technical idea of the present invention, and the technical idea of the present invention should not be limited by materials, shapes, structures, and the like of constituent components described below. The technical idea of the present invention can be variously modified within the technical scope defined by the appended claims.

It should be noted that elements having identical or similar functions are denoted by identical reference signs in the drawings referred to below, and duplicate description will be omitted. Further, the drawings are schematic, and the relationship between the size in a certain direction and the size in another direction, the relationship between the size of a certain member and the size of another member, and the like can be different from the actual ones.

<1> Decorative material and decorative sheet

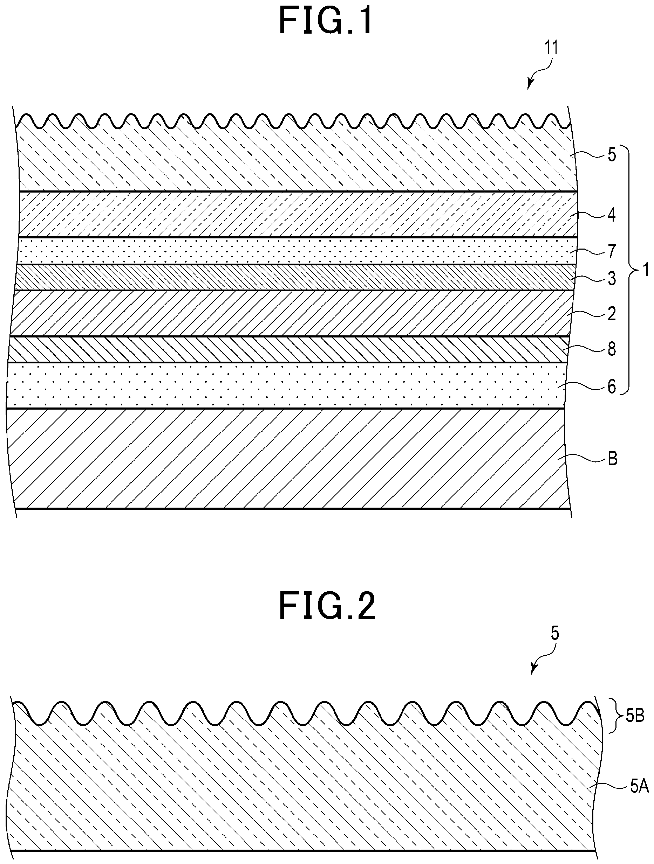

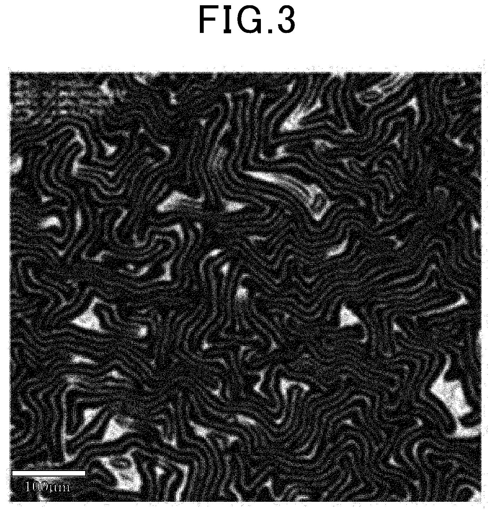

Fig. 1 is a cross-sectional view of a decorative material containing a decorative sheet according to an embodiment of the present invention. Fig. 2 is a cross-sectional view of a surface protective layer contained in the decorative sheet of Fig. 1. Fig. 3 is a microscope photograph of a surface protective layer contained in a decorative sheet according to an example of the present invention.

It should be noted that the cross section shown in Fig. 2 is a cross section along the thickness direction of the surface protective layer. Further, the microscope photograph of Fig. 3 is a two-dimensional photograph obtained using a laser microscope (OLS-4000 manufactured by Olympus Corporation).

A decorative material 11 shown in Fig. 1 includes a substrate B and a decorative sheet 1 adhered to the substrate B. Here, the decorative material 11 is a decorative plate. The decorative plate may be a flat plate and may be bent or folded. The decorative material 11 may have a shape other than a plate.

Here, the substrate B is a plate material. The plate material is, for example, a wood board, an inorganic board, a metal plate, or a composite plate made of a plurality of materials. The substrate B may have a shape other than a plate.

The decorative sheet 1 includes a primary film layer 2, a pattern layer 3, a transparent resin layer 4, a surface protective layer 5, an adhesive agent layer 7, a primer layer 6, and a concealing layer 8. The pattern layer 3, the adhesive layer 7, the transparent resin layer 4, and the surface protective layer 5 are disposed on a surface opposite a surface facing the substrate B of the primary film layer 2, in this order from the primary film layer 2 side. The concealing layer 8 and the primer layer 6 are disposed to a surface facing the substrate B of the primary film layer 2, in this order from the primary film layer 2 side. One or more of the pattern layer 3, the transparent resin layer 4, the primer layer 6, the adhesive layer 7, and the concealing layer 8 may be omitted. Elements contained in the decorative sheet 1 will be sequentially described.

### <1.1> Primary film layer

A usable example of the primary film layer 2 or its material is one optionally selected from paper, synthetic resin, a foam of synthetic resin, rubber, nonwoven fabric, synthetic paper, metal foil, and the like. Examples of the paper include tissue paper, titanium paper, and resin-impregnated paper. Examples of the synthetic resin include polyethylene, polypropylene, polybutylene, polystyrene, polycarbonate, polyester, polyamide, an ethylene-vinyl acetate copolymer, polyvinyl alcohol, and acryl. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. As the nonwoven fabric, organic or inorganic nonwoven fabric can be used. Examples of the metal of the metal foil include aluminum, iron, gold, and silver.

The layer thickness of the primary film layer 2 is preferably in a range of 20 $\mu$m or more and 250 $\mu$m or less, in consideration of printing workability, cost, and the like.

### <1.2> Primer layer

When an olefin-based resin is used as the material of the primary film layer 2, the surface of the primary film layer 2 is inactivated in many cases. Therefore, in this case, a primer layer 6 is preferably provided between the primary film layer 2 and the substrate B. When the primary film layer 2 is formed of an olefin-based material, the primer layer 6 may be omitted, and the primary film layer 2 may be subjected to a surface modification treatment such as a corona treatment, a plasma treatment, an ozone treatment, an electron beam treatment, an ultraviolet treatment, or a bichromate treatment in order to improve adhesiveness between the primary film layer 2 and the substrate material B.

As the material of the primer layer 6, materials described later regarding the pattern layer 3, for example, can be used. Since the primer layer 6 is disposed on the back surface of the decorative sheet 1, an inorganic filler may be added to the primer layer 6 in order to prevent blocking and enhance adhesion with an adhesive agent, in consideration that the decorative sheet 1 is rolled up in a web shape. Examples of the inorganic filler include silica, alumina, magnesia, titanium oxide, and barium sulfate.

### <1.3> Concealing layer

For imparting concealability for the substrate B to the decorative sheet 1, for example, a coloring sheet is used as the primary film layer 2, or the concealing layer 8 being opaque is disposed. The concealing layer 8 can be formed from, for example, the same materials as those described later regarding the pattern layer 3. However, since the concealing layer 8 is intended to provide concealability, an opaque pigment, titanium oxide, iron oxide, or the like is preferably used as a pigment. Further, in order to enhance the concealability, metals such as gold, silver, copper, and aluminum may be added to the materials of the concealing layer 8. In general, aluminum flakes are often added.

### <1.4> Pattern layer

The pattern layer 3 is a layer obtained by printing a pattern on the primary film layer 2 with an ink. A usable binder of the ink is, for example, one or a combination of nitrocellulose, cellulose, vinyl chloride-vinyl acetate copolymers, polyvinyl butyral, polyurethane, acryl, polyesters, and modified products thereof. The binder may be an aqueous, solvent-based, or emulsion-type binder, and may be a one-part type binder or a two-part type binder including a curing agent. The pattern layer 3 may be formed by a method of curing a layer formed with a curable ink by irradiation with ultraviolet light, electronic beams, or the like. Among these, the most typical method is a method of using a urethane-based ink to be cured by isocyanate. The ink used to form the pattern layer 3 further includes, other than the binder, for example, coloring agents such as pigments or dyes, extender pigments, solvents, and various additives contained in a typical ink. Examples of highly versatile pigments include condensed azo, insoluble azo, quinacridone, isoindoline, anthraquinone, imidazolone, cobalt, phthalocyanine, carbon, titanium oxide, iron oxide, and pearl pigments of mica or the like.

Besides the application of an ink, vapor deposition or sputtering of various metals can be used to form a design on the pattern layer 3. In particular, a photostabilizer is preferably added to the above-described ink. This can suppress deterioration of the decorative sheet 1 itself caused by photodegradation of an ink and lengthen the life of the decorative sheet 1.

<1.5> Adhesive layer

The adhesive layer 7 is a layer also called a heat-sensitive adhesive layer, an anchor coat layer, or a dry lamination adhesive layer.

The resin material used for the adhesive layer 7 is not particularly limited, and can be appropriately selected from, for example, acryl-, polyester-, polyurethane-, and epoxy-based resin materials. A further example of the resin material of the adhesive layer 7 is an ethylene-vinyl acetate copolymer resin-based adhesive. The coating method can be appropriately selected depending on, for example, the viscosity of the adhesive agent. In general, gravure coating is used. The adhesive layer 7 is formed on the top of the pattern layer 3 by gravure coating, and thereafter the transparent resin layer 4 is laminated thereto. It should be noted that the adhesive layer 7 can be omitted if sufficient adhesive strength is obtained between the transparent resin layer 4 and the pattern layer 3.

<1.6> Transparent resin layer

The resin material of the transparent resin layer 4 is suitably an olefin-based resin. Examples of the olefin-based resin include polypropylene, polyethylene, and polybutene, as well as homopolymers and copolymers of two or more of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene), and copolymers of ethylene or an $\alpha$-olefin with another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, and an ethylene-butyl acrylate copolymer.

In order to improve surface strength of the decorative sheet 1, highly crystalline polypropylene is preferably used as the resin of the transparent resin layer 4. In necessary, the transparent resin layer 4 may contain various additives such as a thermal stabilizer, a photostabilizer, an anti-blocking agent, a catalyst scavenger, a coloring agent, a light scattering agent, and a matting agent. Typically, thermal stabilizers such as phenol-, sulfur-, phosphorus-, and hydrazine-based thermal stabilizers and photostabilizers such as hindered amine-based photostabilizers are each added in an optional combination.

<1.7> Surface protective layer

The surface protective layer 5 contains a core portion 5A and a plurality of ridge-shaped portions 5B each projecting in a ridge shape from one surface of the core portion 5A. These ridge-shaped portions 5B form an uneven shape structure.

Here, in the decorative sheet 1 according to the present embodiment, the "ridge shape" refers to a convex shape that is linear in plan view. The shape of the ridge-shaped portions 5B in plan view may be curved or linear, but is preferably curved from the viewpoint of fingerprint resistance of the decorative sheet 1. Each of the ridge-shaped portions 5B may or may not be branched in plan view. In the present disclosure, the ridge-shaped portion 5B refers to, for example, a portion from the bottom to the top of the uneven shape formed on the surface of the surface protective layer 5, and the core portion 5A refers to a portion of the surface protective layer 5 excluding the ridge-shaped portions 5B.

As shown in Fig. 3, the ridge-shaped portions 5B are, for example, each curved and at least partly next to each other in the width direction. The cross section of the surface protective layer 5 parallel to this width direction and the thickness direction of the surface protective layer 5 in a position where the ridge-shaped portions 5B are at least partly next to each other in the width direction has, as shown in Fig. 2, a wave shape such as a sinusoidal wave shape in a portion where the uneven structure is disposed.

The uneven structure of the surface protective layer 5 has a projection peak height Rpk of less than 3.5 $\mu$m. Here, the "projection peak height Rpk" is a surface property parameter defined in JIS B 0671-2:2002. This projection peak height Rpk is preferably 3.0 $\mu$m or less and further preferably 2.8 $\mu$m or less. The decorative sheet having a larger projection peak height Rpk can give a rough texture to a user when the user slides the skin on the surface of the surface protective layer, for example, when the user slides the finger on the surface of the surface protective layer.

This projection peak height Rpk is preferably 0.5 $\mu$m or more, more preferably 0.8 $\mu$m or more, and further preferably 1.0 $\mu$m or more. A decorative sheet having a smaller projection peak height Rpk can cause a large frictional force when a user slides the skin on the surface of the surface protective layer, for example, when a user slides the finger on the surface of the surface protective layer.

According to one example of the uneven structure of the surface protective layer 5, the average length RSm of roughness curve elements is preferably 800 $\mu$m or less, more preferably 600 $\mu$m or less, and further preferably 500 $\mu$m or

less. According to another example of the uneven structure of the surface protective layer 5, the average length RSm of roughness curve elements is preferably 350 $\mu$m or less, more preferably 320 $\mu$m or less, and further preferably 300 $\mu$m or less. Here, the "average length RSm of roughness curve elements" is a surface property parameter defined in JIS B 0601:2013. For giving a smooth texture to a user when the user slides the skin on the surface of the surface protective layer, for example, when the user slides the finger on the surface of the surface protective layer, the average length RSm of roughness curve elements is preferably within the above-described range.

This average length RSm is preferably 10 $\mu$m or more, more preferably 50 $\mu$m or more, and further preferably 80 $\mu$m or more. It is difficult to produce a structure having a small average length RSm and a somewhat large projection peak height Rpk.

The thickness of the surface protective layer 5 is preferably 2 $\mu$m or more and less than 10 $\mu$m and more preferably 2 $\mu$m or more and less than 8 $\mu$m. When the thickness of the surface protective layer 5 is decreased, it is difficult to increase the projection peak height Rpk and the average length RSm. When the thickness of the surface protective layer 5 is increased, it is easy to increase the projection peak height Rpk and the average length RSm.

Here, the thickness of the surface protective layer 5 is the thickness of a layer having an apparent surface and volume equal to those of the surface protective layer 5 and having a flat surface. The thickness of the surface protective layer 5 is determined by, for example, the following method. First, a cross section that is parallel to the thickness direction of the surface protective layer 5 and perpendicular to the length direction of the ridge-shaped portions 5B is photographed. Next, from this cross section image, the dimension of the surface protective layer 5 in the width direction of the ridge-shaped portions 5B and the area of the cross section of the surface protective layer 5 are determined. The thickness of the surface protective layer 5 is a value obtained by dividing this area by the above-described dimension. When a later-described coating liquid for a surface protective layer does not contain a solvent, the thickness of a coating film formed of the coating liquid for a surface protective layer is equal to the thickness of the surface protective layer 5.

The gloss level of the surface protective layer 5 is preferably 10.0 or less and more preferably 8.0 or less. The "gloss level" refers to a measurement value measured at an incident angle of 60 degrees using a gloss meter according to JIS Z 8741:1997.

<2> Method of producing decorative sheet

The decorative sheet 1 is produced by, for example, the following method. Here, for simplification, descriptions of the pattern layer 3, the transparent resin layer 4, the primer layer 6, the adhesive layer 7, and the concealing layer 8 will be omitted.

First, a coating film formed of a coating liquid for a surface protective layer is formed on one surface of the primary film layer 2. This coating film can be formed by, for example, various printing methods such as gravure printing, offset printing, screen printing, electrostatic printing, and ink jet printing or various coating methods such as roll coating, knife coating, microgravure coating, and die coating.

The coating liquid for a surface protective layer contains an ionizing radiation-curable resin. Here, "ionizing radiation" is charged particle radiation such as electron beams. An ionizing radiation-curable resin is cured by irradiation with ionizing radiation. Further, an ionizing radiation-curable resin can also be cured by irradiation with ultraviolet light. The ionizing radiation-curable resin used herein is cured by irradiation with light having a wavelength of 200 nm or less while having a large absorption coefficient for this light.

In the coating liquid for a surface protective layer, the amount of the ionizing radiation-curable resin when the solid total amount is 100 parts by mass is preferably 60 parts by mass or more, more preferably 70 parts by mass or more, and further preferably 80 parts by mass or more. As the ionizing radiation-curable resin, any known resins such as various monomers and commercially available oligomers can be used, and examples thereof include (meth)acryl-, silicone-, polyester-, urethane-, amide-, and epoxy-based resins. The ionizing radiation-curable resin may be either an aqueous or non-aqueous (organic solvent-based) resin.

The main component of the ionizing radiation-curable resin is preferably an acrylate. Here, the main component of the ionizing radiation-curable resin denotes being 60 parts by mass or more when the total solid contained in the ionizing radiation-curable resin is 100 parts by mass. The content of the acrylate in the ionizing radiation-curable resin is preferably 70 parts by mass or more and more preferably 80 parts by mass or more.

The acrylate is preferably bi- or higher functional acrylate and more preferably tri- or higher functional acrylate. For obtaining the surface protective layer 5 having excellent scratch resistance, a tri- or higher acrylate is preferable. The upper limit of the number of functional groups of the acrylate is not especially limited, but is 6 or less as an example.

The acrylate preferably contains a repeating structure. This repeating structure is, for example, any of an ethylene oxide (EO) structure, a propylene oxide (PO) structure, and an $\varepsilon$-caprolactone (CL) structure. The repeating structure is preferable ethylene oxide or propylene oxide. In the tri- or higher acrylate containing a repeating structure, the above-described repeating structure can exist in a ring opened state between an acryloyl group and a methylol group.

The number of repetitions of the repeating structure is preferably 3 or more. With this acrylate in which the number of repetitions is large, the cured film is likely to expand in the in-plane direction in a later-described first irradiation step, and accordingly wrinkles corresponding to the ridge-shaped portions 5B are likely to occur on the coating film surface. However, when this number of repetitions is increased, the crosslinking density decreases, and the scratch resistance of the surface protective layer deteriorates.

The trifunctional acrylate containing a repeating structure is, for example, EO-modified, PO-modified, or CL-modified trimethylolpropane triacrylate, glycerine triacrylate, isocyanurate triacrylate, or pentaerythritol triacrylate. In the trifunctional acrylate containing a repeating structure, the number of repetitions of the repeating structure is preferably 3 or more and 30 or less and more preferably 3 or more and 20 or less.

The tetrafunctional acrylate containing a repeating structure is, for example, EO-modified, PO-modified, or CL-modified pentaerythritol pentaacrylate. In the tetrafunctional acrylate containing a repeating structure, the number of repetitions of the repeating structure is preferably 12 or more, more preferably 12 or more and 50 or less, and further preferably 20 or more and 50 or less.

The number of repetitions of the repeating structure can be analyzed using MALDI-TOF-MS. The ionizing radiation-curable resin has a molecular weight distribution in some cases. When there is a molecular weight distribution, the number of repetitions is the number of repetitions corresponding to a molecular weight having the strongest peak in a MALDI-TOF-MS mass spectrum.

The coating liquid for a surface protective layer preferably further contains particles. When the coating liquid for a surface protective layer contains particles, it is possible to generate wrinkles more uniformly on the coating film surface in a first irradiation step.

Usable examples of the particles include: particles formed of organic materials such as polyethylene (PE) wax, polypropylene (PP) wax, and resin beads; and particles formed of inorganic materials such as silica, glass, alumina, titania, zirconia, calcium carbonate, and barium sulfate.

The average particle diameter (D50) of the particles is preferably 10 $\mu$m or less. The average particle diameter (D50) of the particles is more preferably 1 $\mu$m or more and 8 $\mu$m or less and further preferably 2 $\mu$m or more and 6 $\mu$m or less. When large particles are used, detachment of the particles from the surface protective layer 5 is likely to occur, and high scratch resistance may not be realized. When small particles are used, the effect of uniformly generating wrinkles is small.

Here, the "average particle diameter (D50)" is a median diameter (D50) measured by a laser diffraction/scattering particle diameter distribution measuring device. It should be noted that when the coating liquid for a surface protective layer contains particles, the surface protective layer 5 obtained from this coating liquid also contains particles. The average particle diameter of the particles contained in the surface protective layer 5 can be a value obtained by observing the cross section and averaging actually measured particle diameters of multiple particles. The thus obtained value is substantially the same as the value of a median diameter (D50) measured by a laser diffraction/scattering particle diameter distribution measuring device. Therefore, the above-described range of the average particle diameter can be replaced with the range of the average particle diameter of the particles contained in the surface protective layer 5.

The added amount of the particles with respect to 100 parts by mass of the ionizing radiation-curable resin is preferably 0.5 part by mass or more and 10 parts by mass or less, more preferably 2 parts by mass or more and 8 parts by mass or less, and further preferably 2 parts by mass or more and 6 parts by mass or less. When the amount of the particles is within the above-described range, the effect of uniformly generating wrinkles is particularly large.

The coating liquid for a surface protective layer can further contain a solvent and additives for improving the function of a final product, such as an antibacterial agent and a fungicide. The coating liquid for a surface protective layer can further contain other additives such as an ultraviolet absorber and a photostabilizer. Examples of the ultraviolet absorber include benzotriazole-, benzoate-, benzophenone-, and triazine-based ultraviolet absorbers. An example of the photostabilizer is a hindered amine-based photostabilizer. It should be noted that according to the method described herein, a surface protective layer 5 having a low gloss level can be formed without a gloss adjusting agent (matting additive).

In order to cure the whole of the coating film formed of the coating liquid for a surface protective layer by irradiation with ultraviolet light in a later-described second irradiation step, it is preferable that the coating liquid for a surface protective layer further contains a photoinitiator. The photoinitiator is not particularly limited, and examples thereof include benzophenone-, acetophenone-, benzoin ether-, and thioxanthone-based photoinitiators.

After the coating film formed of the coating liquid for a surface protective layer has been formed, a first irradiation step is performed. In the first irradiation step, the coating film is irradiated with light having a wavelength of 200 nm or less (hereinafter, referred to as first irradiation light). The ionizing radiation-curable resin contained in the coating liquid for a surface protective layer has a large light absorption coefficient for the first irradiation light. Therefore, the first irradiation light entering the coating film reaches only several tens to hundreds of nanometers from the outermost surface. Therefore, in the first irradiation step, a crosslinking reaction proceeds in the surface region of the coating film to form an extremely thin cured film, while a crosslinking reaction does not proceed in other regions so that an uncured state is maintained.

The coating film after the first irradiation step has wrinkles corresponding to the ridge-shaped portions 5B on the surface. The present inventor considers that the reason for which wrinkles are generated on the coating film surface by the first irradiation step is as described below.

As described above, the first irradiation light reaches only several tens to hundreds of nanometers from the outermost surface of the coating film. That is, the crosslinking reaction of the ionizing radiation-curable resin occurs only on the surface of the coating film. Monomers and the like present on the surface of the coating film are crosslinked via functional groups thereof by irradiation with the first irradiation light to form a cured film, but not all of the functional groups thereof are used for the crosslinking between monomers present on the surface of the coating film. That is, uncrosslinked functional groups can remain in the cured film.

Since the first irradiation light does not reach monomers present in a position away from the surface of the coating film, a crosslinking reaction of the monomers does not occur. However, the monomers present in a position away from the surface of the coating film partly move to the cured film and are subjected to a crosslinking reaction there. In this manner, the number of molecules involved in a crosslinking reaction increases.

When the number of molecules involved in a crosslinking reaction in the coating film surface increases, the volume of the cured film increases. Since a crosslinking reaction occurs only in the surface of the coating film, the volume of the cured film cannot be increased in the thickness direction and expands in the in-plane direction. As a result, wrinkles occur in the surface of the coating film.

The first irradiation light can be extracted from excimer vacuum ultraviolet (VUV) light. Excimer VUV light can be produced from a noble gas lamp or a noble gas halide compound lamp. When high energy electrons are externally given to a lamp having a noble gas or a noble gas halide compound gas sealed therein, a large amount of discharge plasma (dielectric barrier discharge) is generated. This plasma discharge excites atoms of discharge gas (noble gas) and instantaneously converts them into the excimer state. When the atoms return from the excimer state to the ground state, light having a wavelength range specific to that excimer is emitted.

A gas used in an excimer lamp may be any conventionally used gas as long as it emits light at 200 nm or less. Examples of the gas include noble gases such as Xe, Ar, and Kr, and mixed gases of noble gases and halogen gases such as ArBr and ArF. Light from an excimer lamp has different wavelengths (center wavelengths) for different gases, such as about 172 nm (Xe), about 126 nm (Ar), about 146 nm (Kr), about 165 nm (ArBr), and about 193 nm (ArF).

In consideration of the magnitude of the photon energy and the difference between the wavelength and the binding energy of organic matter, it is preferred to use a xenon lamp that emits excimer light with a center wavelength of 172 nm as a light source. Further, even when the cost of maintaining the equipment, the availability of materials, and the like are also considered, it is preferable to use a xenon lamp as a light source.

The first irradiation step is performed in a low oxygen concentration atmosphere. Oxygen has a large absorption coefficient for light of 200 nm or less. Therefore, the first irradiation step is preferably performed, for example, in a nitrogen gas atmosphere. The oxygen concentration in the vapor phase in the first irradiation step, i.e., the residual oxygen concentration in the reaction atmosphere, is preferably 2000 ppm or less and more preferably 1000 ppm or less.

Further, the oxygen in the atmosphere inhibits radical polymerization. Therefore, the residual oxygen concentration in the reaction atmosphere influences formation of wrinkles in the coating film surface. Therefore, when the residual oxygen concentration in the reaction atmosphere is changed, the surface properties of the surface protective layer 5 can also be changed.

The integrated light intensity of the first irradiation light is preferably 0.5 mJ/cm$^2$ or more and 200 mJ/cm$^2$ or less, more preferably 1 mJ/cm$^2$ or more and 100 mJ/cm$^2$ or less, and further preferably 3 mJ/cm$^2$ or more and 50 mJ/cm$^2$ or less. When the integrated light intensity is decreased, expansion in the in-plane direction of the cured film decreases. When the integrated light intensity is increased, the surface state of the coating film deteriorates.

After completion of the first irradiation step, a second irradiation step is performed. In the second irradiation step, the coating film is irradiated with second radiation or irradiation light to cure the whole of the coating film. Accordingly, the surface protective layer 5 is obtained.

The second radiation or irradiation light is ionizing radiation such as electron beams or ultraviolet light having a wavelength longer than that of the first irradiation light.

When the second radiation or irradiation light is ultraviolet light, the integrated light intensity of the second irradiation light is preferably 10 mJ/cm$^2$ or more and 500 mJ/cm$^2$ or less, more preferably 50 mJ/cm$^2$ or more and 400 mJ/cm2 or less, and further preferably 100 mJ/cm$^2$ or more and 300 mJ/cm$^2$ or less.

The decorative sheet 1 can be produced by, for example, the above-described method. The decorative sheet 1 may be produced by another method. For example, a plate may be formed using the method described above regarding the surface protective layer 5, and transfer may be performed using this plate to form the surface protective layer 5 having an uneven structure on the surface.

<3> Effect

In the decorative sheet 1 described with reference to Fig. 1 to Fig. 3, the surface protective layer 5 has the above-described surface properties. Such a decorative sheet 1 gives a smooth texture to a user when the user slides the skin on the surface of the surface protective layer 5, for example, when the user slides the finger on the surface of the surface protective layer 5. That is, this decorative sheet 1 enables a user to slide the finger or the like with a small frictional force without feeling the existence of large unevenness.

The decorative sheet 1 to give a smooth texture to a user is suitable for uses in which it often touches the user's skin or uses in which it touches the user's skin for a long time, for example, for uses in furniture. An article including the above-described decorative sheet 1 does not cause discomfort to a user when it touches the user's skin.

Since the surface protective layer 5 of the decorative sheet 1 has the above-described surface properties, a low gloss level can be achieved even when a gloss adjusting agent (matting additive) is not contained. Since a gloss adjusting agent lowers the oil repellency of a layer formed from a resin material, the surface protective layer containing a gloss adjusting agent is susceptible to fingerprints. Since the surface protective layer 5 containing no gloss adjusting agent hardly absorbs oil, fingerprints are unlikely to attach thereto. Further, in the surface protective layer 5 having excellent oil repellency, oil stains and adsorption of contaminants hardly occur. Furthermore, in the surface protective layer 5 containing no gloss adjusting agent, particles of a gloss adjusting agent do not detach when the surface is scratched. Therefore, in the decorative sheet 1 including such a surface protective layer 5, gloss changes and scratches hardly occur.

The reason for which the surface protective layer 5 having the above-described surface properties is obtained by the above-described method is as described below.

The oxygen in the vapor phase not only absorbs short-wavelength ultraviolet light but also inhibits radical polymerization. The influence on radical polymerization by the oxygen contained in the vapor phase is largest in a portion adjacent to the vapor phase of the coating film formed of the ionizing radiation-curable resin, and decreases as a distance from the coating film surface increases. Therefore, the relationship between the distance from the coating film surface and the proceeding degree of the crosslinking reaction can be changed by changing the oxygen concentration in the vapor phase in the first irradiation step.

The change in this relationship changes the thickness of the cured film generated on the surface of the coating film by the first irradiation step and the expansion degree of the cured film in the in-plane direction corresponding to the proceeding of the crosslinking reaction. The thickness of the cured film and the expansion degree of the cured film in the in-plane direction are also influenced by the integrated light intensity in the first irradiation step. Further, the thickness of the cured film and the expansion degree of the cured film in the in-plane direction influence the surface properties of the surface protective layer. Moreover, the thickness of the coating film also influences the formation of wrinkles.

Therefore, the surface protective layer having desired surface properties can be obtained by appropriately setting, for example, the chemical composition of the ionizing radiation-curable resin, the thickness of the coating film, the oxygen concentration in the vapor phase in the first irradiation step, and the integrated light intensity in the first irradiation step.

EXAMPLES

Examples of the present invention will be described below.

<Example 1>

The decorative sheet 1 described with reference to Fig. 1 to Fig. 3 was produced by the following method. It should be noted that in the present example, the transparent resin layer 4, the primer layer 6, the adhesive layer 7, and the concealing layer 8 were omitted.

First, impregnated paper having a basis weight of 50 g/m$^2$ (GFR-506, manufactured by Kohjin Co., Ltd.) was prepared as the primary film layer 2. To one surface of the primary film layer 2, the pattern layer 3 was formed using an oily nitrocellulose resin-based gravure printing ink (various colors of PCNT (PCRNT) manufactured by Toyo Ink Co., Ltd.).

Next, the pattern layer 3 was coated with a coating liquid for a surface protective layer. As the coating liquid for a surface protective layer, one in which the following particles were blended to the following ionizing radiation-curable resin was used.

· Ionizing radiation-curable resin

Type: Ethylene glycol diacrylate (9 mol of EO added)

Product name: Light Acrylate 9EG-A (manufactured by Kyoeisha Chemical Co., Ltd.)

Blended amount: 100 parts by mass

· Particles

Product name: Sylysia 250N (manufactured by Fuji Silysia Chemical Ltd.)

Particle diameter: 5 $\mu$m

Blended amount: 0.5 part by mass

A coating film formed of the coating liquid for a surface protective layer was formed to have a thickness of 5 $\mu$m.
Thereafter, the first irradiation step was performed. Specifically, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 50 mJ/cm$^2$. Accordingly, wrinkles were generated on the surface of the coating film.
Subsequently, the second irradiation step was performed. Specifically, the whole of the coating film was cured by irradiation with ionizing radiation to form the surface protective layer 5. In the above-described manner, the decorative sheet 1 was obtained.

<Example 2>

The decorative sheet 1 was produced by the same method as in Example 1 except for the following points. That is, in the present example, the following ionizing radiation-curable resin was used.

· Ionizing radiation-curable resin

Type: Trimethylol propane EO-modified triacrylate (6 mol of EO added)

Product name: Miramer M3160 (manufactured by Miwon Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 50 mJ/cm$^2$.

<Example 3>

The decorative sheet 1 was produced by the same method as in Example 1 except for the following points. That is, in the present example, the following ionizing radiation-curable resin was used.

· Ionizing radiation-curable resin

Type: Trimethylol propane EO-modified triacrylate (15 mol of EO added)

Product name: SR9035 (manufactured by Sartomer Co.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 50 mJ/cm$^2$.

<Example 4>

The decorative sheet 1 was produced by the same method as in Example 1 except for the following points. That is, in the present example, the following ionizing radiation-curable resin was used.

· Ionizing radiation-curable resin

Type: Trimethylol propane EO-modified triacrylate (3 mol of EO added)

Product name: Miramer M3130 (manufactured by Miwon Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 100 mJ/cm$^2$.

<Example 5>

The decorative sheet 1 was produced by the same method as in Example 1 except for the following points. That is, in the present example, the following ionizing radiation-curable resin was used.

· Ionizing radiation-curable resin

Type: Trimethylol propane PO-modified triacrylate (6 mol of PO added)

Product name: NK Ester A-TMPT-6PO (manufactured by Shin Nakamura Chemical Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 50 mJ/cm$^2$.

<Example 6>

The decorative sheet 1 was produced by the same method as in Example 1 except for the following points. That is, in the present example, the following ionizing radiation-curable resin was used.

· Ionizing radiation-curable resin

Type: Caprolactone-modified tris-(2-acryloxyethyl)isocyanurate (3 mol of caprolactone (CL) added)

Product name: NK Ester A-9300-3CL (manufactured by Shin Nakamura Chemical Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 100 mJ/cm$^2$.

<Example 7>

The decorative sheet 1 was produced by the same method as in Example 1 except for the following points. That is, in the present example, the following ionizing radiation-curable resin was used. A coating film formed of the coating liquid for a surface protective layer was formed to have a thickness of 1 $\mu$m.

□ Ionizing radiation-curable resin

Type: Trimethylol propane EO-modified triacrylate (6 mol of EO added)

Product name: Miramer M3160 (manufactured by Miwon Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 10 mJ/cm$^2$.

<Example 8>

The decorative sheet 1 was produced by the same method as in Example 1 except for the following points. That is, in the present example, the following ionizing radiation-curable resin was used. A coating film formed of the coating liquid for a surface protective layer was formed to have a thickness of 2 $\mu$m.

□ Ionizing radiation-curable resin

Type: Trimethylol propane EO-modified triacrylate (6 mol of EO added)

Product name: Miramer M3160 (manufactured by Miwon Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 10 mJ/cm$^2$.

<Example 9>

The decorative sheet 1 was produced by the same method as in Example 1 except for the following points. That is, in the present example, the following ionizing radiation-curable resin was used. A coating film formed of the coating liquid for a surface protective layer was formed to have a thickness of 9 $\mu$m.

□ Ionizing radiation-curable resin

Type: Trimethylol propane EO-modified triacrylate (3 mol of EO added)

Product name: Miramer M3130 (manufactured by Miwon Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 150 mJ/cm$^2$.

<Example 10>

The decorative sheet 1 was produced by the same method as in Example 1 except for the following points. That is, in the present example, the following ionizing radiation-curable resin was used.

· Ionizing radiation-curable resin

Type: Ethoxylated pentaerythritol tetraacrylate (35 mol of EO added)

Product name: NK Ester ATM-3 5E (manufactured by Shin Nakamura Chemical Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 50 mJ/cm$^2$.

<Example 11>

The decorative sheet 1 was produced by the same method as in Example 1 except for the following points. That is, in the present example, the following ionizing radiation-curable resin was used.

· Ionizing radiation-curable resin

Type: Ethoxylated pentaerythritol tetraacrylate (50 mol of EO added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 50 mJ/cm$^2$.

<Example 12>

The decorative sheet 1 was produced by the same method as in Example 1 except for the following points. That is, in the present example, the following ionizing radiation-curable resin was used.

· Ionizing radiation-curable resin

Type: Ethoxylated pentaerythritol tetraacrylate (20 mol of EO added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 100 ppm under atmospheric pressure, such that the integrated light intensity became 100 mJ/cm$^2$.

<Example 13>

The decorative sheet 1 was produced by the same method as in Example 1 except for the following points. That is, in the present example, the following ionizing radiation-curable resin was used.

· Ionizing radiation-curable resin

Type: Propoxylated pentaerythritol tetraacrylate (35 mol of PO added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 50 mJ/cm$^2$.

<Example 14>

The decorative sheet 1 was produced by the same method as in Example 1 except for the following points. That is, in the present example, the following ionizing radiation-curable resin was used.

· Ionizing radiation-curable resin

Type: Caprolactone-modified pentaerythritol pentaacrylate (20 mol of CL added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 100 ppm under atmospheric pressure, such that the integrated light intensity became 100 mJ/cm$^2$.

<Example 15>

The decorative sheet 1 was produced by the same method as in Example 1 except for the following points. That is, in the present example, the following ionizing radiation-curable resin was used. A coating film formed of the coating liquid for a surface protective layer was formed to have a thickness of 1 μm.

☐ Ionizing radiation-curable resin

Type: Ethoxylated pentaerythritol tetraacrylate (35 mol of EO added)

Product name: NK Ester ATM-3 5E (manufactured by Shin Nakamura Chemical Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 10 mJ/cm$^2$.

<Example 16>

The decorative sheet 1 was produced by the same method as in Example 1 except for the following points. That is, in the present example, the following ionizing radiation-curable resin was used. A coating film formed of the coating liquid for a surface protective layer was formed to have a thickness of 2 μm.

☐ Ionizing radiation-curable resin

Type: Ethoxylated pentaerythritol tetraacrylate (35 mol of EO added)

Product name: NK Ester ATM-3 5E (manufactured by Shin Nakamura Chemical Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 10 mJ/cm$^2$.

<Example 17>

The decorative sheet 1 was produced by the same method as in Example 1 except for the following points. That is, in the present example, the following ionizing radiation-curable resin was used. A coating film formed of the coating liquid for a surface protective layer was formed to have a thickness of 9 μm.

☐ Ionizing radiation-curable resin

Type: Ethoxylated pentaerythritol tetraacrylate (20 mol of EO added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became

150 mJ/cm$^2$.

<Example 18>

The decorative sheet 1 was produced by the same method as in Example 1 except for the following points. That is, in the present example, the following ionizing radiation-curable resin was used.

· Ionizing radiation-curable resin

Type: Ethoxylated dipentaerythritol hexaacrylate (12 mol of EO added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 100 ppm under atmospheric pressure, such that the integrated light intensity became 150 mJ/cm$^2$.

<Example 19>

The decorative sheet 1 was produced by the same method as in Example 1 except for the following points. That is, in the present example, the following ionizing radiation-curable resin was used. A coating film formed of the coating liquid for a surface protective layer was formed to have a thickness of 9 μm.

☐ Ionizing radiation-curable resin

Type: Ethoxylated pentaerythritol tetraacrylate (20 mol of EO added)

<Example 20>

The decorative sheet 1 was produced by the same method as in Example 1 except for the following points. That is, in the present example, the following ionizing radiation-curable resin was used. A coating film formed of the coating liquid for a surface protective layer was formed to have a thickness of 9 μm.

☐ Ionizing radiation-curable resin

Type: Ethoxylated pentaerythritol tetraacrylate (20 mol of EO added)
In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 150 mJ/cm$^2$.

<Comparative Example 1>

The decorative sheet was produced by the same manner as in Example 1 except for the following points. That is, in the present example, one in which the following particles were blended to the following ionizing radiation-curable resin was used as the coating liquid for a surface protective layer.

· Ionizing radiation-curable resin

Type: Trimethylol propane EO-modified triacrylate (6 mol of EO added)

Product name: Miramer M3160 (manufactured by Miwon Co., Ltd.)

Blended amount: 100 parts by mass

· Particles

Product name: Sylysia 250N (manufactured by Fuji Silysia Chemical Ltd.)

Particle diameter: 5 μm

Blended amount: 15 parts by mass

The first irradiation step was not performed, and the coating film formed of the coating liquid for a surface protective layer was cured only by the second irradiation step.

<Comparative Example 2>

The decorative sheet was produced by the same manner as in Example 1 except for the following points. That is, in the present example, one in which the following particles were blended to the following ionizing radiation-curable resin was used as the coating liquid for a surface protective layer.

· Ionizing radiation-curable resin

Type: Ethoxylated pentaerythritol tetraacrylate (35 mol of EO added)

Product name: NK Ester ATM-3 5E (manufactured by Shin Nakamura Chemical Co., Ltd.)

Blended amount: 100 parts by mass

· Particles

Product name: Sylysia 250N (manufactured by Fuji Silysia Chemical Ltd.)

Particle diameter: 5 μm

Blended amount: 15 parts by mass

The first irradiation step was not performed, and the coating film formed of the coating liquid for a surface protective layer was cured only by the second irradiation step.

<Comparative Example 3>

The decorative sheet was produced by the same manner as in Example 1 except for the following points. That is, in the present example, the following ionizing radiation-curable resin was used. A coating film formed of the coating liquid for a surface protective layer was formed to have a thickness of 10 μm.

□ Ionizing radiation-curable resin

Type: Trimethylol propane EO-modified triacrylate (6 mol of EO added)

Product name: Miramer M3160 (manufactured by Miwon Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 500 ppm under atmospheric pressure, such that the integrated light intensity became 150 mJ/cm$^2$.

<Comparative Example 4>

The decorative sheet was produced by the same manner as in Example 1 except for the following points. That is, in the present example, the following ionizing radiation-curable resin was used. A coating film formed of the coating liquid for a surface protective layer was formed to have a thickness of 10 μm.

□ Ionizing radiation-curable resin

   Type: Ethoxylated pentaerythritol tetraacrylate (35 mol of EO added)

   Product name: NK Ester ATM-3 5E (manufactured by Shin Nakamura Chemical Co., Ltd.)

In the first irradiation step, the surface of the coating film formed of the coating liquid for a surface protective layer was irradiated with ultraviolet light having a wavelength of 172 nm using an Xe excimer lamp in a nitrogen gas atmosphere having an oxygen concentration of 200 ppm under atmospheric pressure, such that the integrated light intensity became 150 mJ/cm$^2$.

<Evaluation>

The above-described decorative sheets were evaluated as described below.

(1) Gloss level

For the gloss level, a 60-degree gloss level was measured using a Rhopoint IQ (manufactured by Konica Minolta Inc.). This 60-degree gloss level is illustrated as the "60-degree gloss value" in Tables 1 to 4 below.

(2) Skin texture

The skin texture was evaluated by the following method. First, advance preparation was performed such that evaluation criteria are the same among evaluators. Specifically, ten reference specimens having different surface properties were prepared. Next, 20 evaluators each slid a the finger on the surface of each of the reference specimens while blindfolded, and thereafter classified the texture into each of five groups. First group: Existence of unevenness was hardly felt, and it was felt that a frictional force was small. Second group: Existence of small unevenness was felt, or it was felt that a frictional force was slightly large. Third group: Texture in the middle between texture of First group and texture of Second group was felt. Fourth group: Existence of large unevenness was felt. Fifth group: Existence of unevenness was not felt, and it was felt that a frictional force was large. The above-described procedure was repeated until three or more consecutive evaluations by each evaluator were the same, and three consecutive evaluation results were the same among the evaluators.
Next, each of the evaluators slid a finger on the surface of each of the decorative sheets while blindfolded, and thereafter classified the texture into each of the above-described five groups. This procedure was repeated until three or more consecutive evaluations by each evaluator were the same, and three consecutive evaluation results were the same among the evaluators. From this result, the feeling against the skin was evaluated according to the following criteria. AAA (smooth): First group

   AA (smooth): Third group

   A (smooth): Second group

   B (rough or slippery): Fourth group or Fifth group

(3) Fingerprint resistance

Evaluation of fingerprint wipe-off capability was performed as evaluation of fingerprint resistance. Specifically, the 60-degree gloss level of the surface of each decorative sheet was firstly measured, and this 60-degree gloss level was set as an initial gloss level. Then, a solution for evaluating fingerprint resistance was adhered on the surface protective layer, and the solution for evaluating fingerprint resistance adhered on the surface of the decorative sheet was wiped off.

The solution for evaluating fingerprint resistance used here was a higher fatty acid. Thereafter, the 60-degree gloss level of the area from which the solution for evaluating fingerprint resistance had been wiped off was measured, and this 60-degree gloss level was set as a gloss level after wipe-off.

The fingerprint wipe-off rate was calculated according to the following expression.

$$\text{Fingerprint wipe-off rate (\%)} = (\text{gloss level after wipe-off/initial gloss level}) \times 100$$

The evaluation criteria were as follows. AA: 70% or more and less than 250%

A: 50% or more and less than 70%, or 250% or more and less than 300%
B: Less than 50%, or 300% or more

(4) Contamination resistance

As contamination resistance evaluation, a test using Contaminant A as defined in Japanese Agricultural Standards (JAS) was performed. That is, a blue ink line, a black quick-drying ink line, and a red crayon line each having a width of 10 mm were drawn on the surface protective layer of each decorative sheet, and left to stand for 4 hours. Thereafter, the blue ink, black quick-drying ink, and red crayon lines were wiped off with a cloth impregnated with ethanol.
The evaluation criteria were as follows. AA: The color lines were easily wiped off. A: The color lines were partially wiped off, but stains were partially left. B: The color lines were not wiped off.

(5) Scratch resistance test

Using a urethane-based adhesive agent, each decorative sheet was adhered to a wooden substrate B. Thereafter, as scratch resistance evaluation, a steel wool rubbing test was performed. Specifically, the decorative sheet was rubbed with steel wool by 20 reciprocations at a load of 100 g, and the surface of the decorative sheet was visually examined for scratches and gloss changes.
The evaluation criteria were as follows. AA: Neither scratches nor gloss changes occurred on the surface. A: Slight scratches or gloss changes occurred on the surface. B: Severe scratches or gloss changes occurred on the surface.

[Table 1]

| | | | Example 1 | Example 2 | Example 3 | Example 4 | Example 5 | Example 6 | Example 7 |
|---|---|---|---|---|---|---|---|---|---|
| Surface shape | | | Ridged | Ridged | Ridged | Ridged | Ridged | Ridged | Ridged |
| Rpk ($\mu$m) | | | 2.1 | 2.9 | 2.6 | 2.8 | 2.9 | 2.1 | 0.5 |
| RSm ($\mu$m) | | | 286.5 | 311.5 | 185.6 | 346.3 | 318.5 | 340.5 | 150.0 |
| Thickness ($\mu$m) | | | 5 | 5 | 5 | 5 | 5 | 5 | 1 |
| Acryl resin | Number of functional groups | | 2 | 3 | 3 | 3 | 3 | 3 | 3 |
| | Repeating structure | Structure | C2H4O | C2H4O | C2H4O | C2H4O | C3H6O | C6H10O2 | C2H4O |
| | | Number of repetitions | 9 | 6 | 15 | 3 | 6 | 3 | 6 |
| 60-Degree gloss value | | | 3.1 | 3.0 | 1.8 | 4.3 | 3.1 | 4.8 | 8.0 |
| Skin texture | Smooth (silky) | | AA | AA | AAA | A | AA | A | A |
| Fingerprint resistance | | | AA | AA | AA | AA | AA | AA | AA |
| Contamination resistance | Contaminant A | | AA | AA | AA | AA | AA | AA | AA |
| Scratch resistance | Steel | | B | AA | AA | AA | AA | AA | AA |

EP 4 545 294 A1

[Table 2]

| | | | Example 8 | Example 9 | Example 10 | Example 11 | Example 12 | Example 13 | Example 14 |
|---|---|---|---|---|---|---|---|---|---|
| Surface shape | | | Ridged | Ridged | Ridged | Ridged | Ridged | Ridged | Ridged |
| Rpk ($\mu$m) | | | 0.8 | 3.4 | 2.8 | 2.7 | 2.7 | 2.9 | 2.6 |
| RSm ($\mu$m) | | | 186.5 | 298.6 | 308.5 | 196.3 | 344.0 | 296.5 | 348.7 |
| Thickness ($\mu$m) | | | 2 | 9 | 5 | 5 | 5 | 5 | 5 |
| Acryl resin | Number of functional groups | | 3 | 3 | 4 | 4 | 4 | 4 | 4 |
| | Repeating structure | Structure | C2H4O | C2H4O | C2H4O | C2H4O | C2H4O | C3H6O | C6H10O2 |
| | | Number of repetitions | 6 | 3 | 35 | 50 | 20 | 35 | 20 |
| 60-Degree gloss value | | | 6.2 | 3.2 | 2.8 | 1.7 | 4.5 | 3.0 | 4.1 |
| Skin texture | Smooth (silky) | | AA | A | AA | AAA | A | AA | A |
| Fingerprint resistance | | | AA | AA | AA | AA | AA | AA | AA |
| Contamination resistance | Contaminant A | | AA | AA | AA | AA | AA | AA | AA |
| Scratch resistance | Steel | | AA | AA | AA | AA | AA | AA | AA |

[Table 3]

| | | | Example 15 | Example 16 | Example 17 | Example 18 | Example 19 | Example 20 |
|---|---|---|---|---|---|---|---|---|
| Surface shape | | | Ridged | Ridged | Ridged | Ridged | Ridged | Ridged |
| Rpk ($\mu$m) | | | 0.5 | 1.0 | 3.4 | 1.3 | 3.3 | 3.2 |
| RSm ($\mu$m) | | | 152.3 | 202.5 | 321.6 | 358.6 | 780.2 | 586.1 |
| Thickness ($\mu$m) | | | 1 | 2 | 9 | 5 | 9 | 9 |
| Acryl resin | Number of functional groups | | 4 | 4 | 4 | 6 | 4 | 4 |
| | Repeating structure | Structure | C2H4O | C2H4O | C2H4O | C2H4O | C2H4O | C2H4O |
| | | Number of repetitions | 35 | 35 | 20 | 12 | 20 | 20 |
| 60-Degree gloss value | | | 8.0 | 5.8 | 3.6 | 8.0 | 8.0 | 6.5 |
| Skin texture | Smooth (silky) | | A | AA | A | AA | A | A |
| Fingerprint resistance | | | AA | AA | AA | AA | AA | AA |
| Contamination resistance | Contaminant A | | AA | AA | AA | AA | AA | AA |
| Scratch resistance | Steel | | AA | AA | AA | AA | AA | AA |

[Table 4]

| | | | Comparative Example 1 | Comparative Example 2 | Comparative Example 3 | Comparative Example 4 |
|---|---|---|---|---|---|---|
| Surface shape | | | Uneven by particles | Uneven by particles | Ridged | Ridged |
| | | Rpk ($\mu$m) | 0.4 | 0.4 | 4.5 | 4.5 |
| | | RSm ($\mu$m) | 1050.2 | 986.3 | 312.6 | 321.4 |
| Thickness ($\mu$m) | | | 5 | 5 | 10 | 10 |
| Acryl resin | Number of functional groups | | 3 | 4 | 3 | 4 |
| | Repeating structure | Structure | C2H4O | C2H4O | C2H4O | C2H4O |
| | | Number of repetitions | 6 | 35 | 6 | 35 |
| 60-Degree gloss value | | | 10 | 10 | 2.5 | 2.5 |
| Skin texture | Smooth (silky) | | B | B | B | B |
| Fingerprint resistance | | | B | B | AA | AA |
| Contamination resistance | Contaminant A | | B | B | AA | AA |
| Scratch resistance | Steel | | B | B | AA | AA |

As shown in Tables 1 to 3, the decorative sheets according to Examples 1 to 20 provided a smooth texture to the evaluators. In addition, the decorative sheets according to Examples 1 to 20 had a low gloss and were excellent in fingerprint resistance and contamination resistance. Further, the decorative sheets according to Examples 2 to 20 were also excellent in scratch resistance. On the contrary, as shown in Table 4, the decorative sheets according to Comparative Examples 1 and 2 were not felt by the evaluators to have a smooth texture and poor in all of fingerprint resistance, contamination resistance, and scratch resistance. Further, the decorative sheets according to Comparative Examples 3 and 4 had a low gloss and were excellent in fingerprint resistance, contamination resistance, and scratch resistance, but were not felt by the evaluators to have a smooth texture.

[Reference Signs List]

1 Decorative sheet

2 Primary film layer

3 Pattern layer

4 Transparent resin layer

5 Surface protective layer

6 Primer layer

7 Adhesive layer

8 Concealing layer

11 Decorative material

B Substrate

**Claims**

1. A decorative sheet comprising a primary film layer and a surface protective layer disposed on one surface of the primary film layer, wherein

   an uneven structure including a plurality of ridged portions protruding in a ridged shape is disposed on a surface of the surface protective layer, and
   the uneven structure of the surface protective layer has a projection peak height Rpk of less than 3.5 $\mu$m.

2. The decorative sheet according to claim 1, wherein the projection peak height Rpk is 0.5 $\mu$m or more.

3. The decorative sheet according to claim 1 or 2, wherein in the uneven structure of the surface protective layer, an average length RSm of roughness curve elements is 800 $\mu$m or less.

4. The decorative sheet according to claim 3, wherein the average length RSm is 10 $\mu$m or more.

5. The decorative sheet according to any one of claims 1 to 4, wherein the surface protective layer has a thickness of 2 $\mu$m or more and less than 10 $\mu$m.

6. The decorative sheet according to any one of claims 1 to 5, wherein the surface protective layer has a gloss level of 10.0 or less.

7. The decorative sheet according to any one of claims 1 to 6, wherein the plurality of ridge-shaped portions is at least partly adjacent to each other in a width direction, and a cross section parallel to the width direction and a thickness direction of the surface protective layer in a position where the plurality of ridge-shaped portions is at least partly adjacent to each other in the width direction has a sinusoidal wave shape in a portion where the uneven structure is disposed.

8. The decorative sheet according to any one of claims 1 to 7, wherein the surface protective layer contains a cured product of an ionizing radiation-curable resin.

9. The decorative sheet according to claim 8, wherein

   the ionizing radiation-curable resin includes as a main component an acrylate containing a repeating structure, the repeating structure is any of ethylene oxide, propylene oxide, and ε-caprolactone, and the number of repetitions of the repeating structure is 3 or more.

10. A decorative material comprising:

   the decorative sheet according to any one of claims 1 to 9; and a substrate to which the decorative sheet is adhered.

# FIG.1

# FIG.2

# FIG.3

# INTERNATIONAL SEARCH REPORT

International application No.

**PCT/JP2023/023146**

## A. CLASSIFICATION OF SUBJECT MATTER

***B32B 27/00***(2006.01)i; ***E04F 15/02***(2006.01)i
FI: B32B27/00 E; E04F15/02 C

According to International Patent Classification (IPC) or to both national classification and IPC

## B. FIELDS SEARCHED

Minimum documentation searched (classification system followed by classification symbols)

B32B27/00; B32B27/30; E04F13/00; E04F13/07; E04F15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | KR 10-2020-0031282 A (LG HAUSYS, LTD.) 24 March 2020 (2020-03-24) claims, paragraphs [0001]-[0009], [0043]-[0072], [0094]-[0152], fig. 1-4 | 1-8, 10 |
| Y | | 9 |
| X | WO 2021/201105 A1 (DAINIPPON PRINTING CO., LTD.) 07 October 2021 (2021-10-07) claims, paragraphs [0001]-[0023], [0070]-[0075], [0316]-[0337], [0425]-[0434], fig. 53-55 | 1-8, 10 |
| Y | | 9 |
| Y | JP 2017-171794 A (TOYO INK SC HOLDINGS CO., LTD.) 28 September 2017 (2017-09-28) claims, paragraphs [0001], [0016], [0023]-[0027], [0080] | 9 |
| Y | US 2016/0152833 A1 (COVESTRO DEUTSCHLAND AG) 02 June 2016 (2016-06-02) claims, paragraphs [0008], [0009], [0042]-[0047] | 9 |
| Y | US 6663952 B1 (WKP WURTTEMBERGISCHE KUNSTSTOFFPLATTEN-WERKE GMBH & CO. KG) 16 December 2003 (2003-12-16) column 3, lines 59-62 | 9 |

☑ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 August 2023** | **22 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/023146**

## C. DOCUMENTS CONSIDERED TO BE RELEVANT

| Category* | Citation of document, with indication, where appropriate, of the relevant passages | Relevant to claim No. |
|---|---|---|
| A | JP 2020-111715 A (MITSUBISHI CHEMICAL CORP.) 27 July 2020 (2020-07-27)<br>entire text | 1-10 |
| A | WO 2021/235493 A1 (NIPPON PAINT AUTOMOTIVE COATINGS CO., LTD.) 25 November 2021 (2021-11-25)<br>entire text | 1-10 |
| A | JP 2021-101090 A (TOLI CORP.) 08 July 2021 (2021-07-08)<br>entire text | 1-10 |
| A | JP 2018-159052 A (MITSUBISHI CHEMICAL CORP.) 11 October 2018 (2018-10-11)<br>entire text | 1-10 |
| A | JP 2016-99671 A (DAINIPPON PRINTING CO., LTD.) 30 May 2016 (2016-05-30)<br>entire text | 1-10 |
| A | JP 2016-150473 A (LINTEC CORP.) 22 August 2016 (2016-08-22)<br>entire text | 1-10 |
| A | JP 7002032 B1 (DAINIPPON PRINTING CO., LTD.) 20 January 2022 (2022-01-20)<br>entire text | 1-10 |
| A | WO 2020/158921 A1 (DAINIPPON PRINTING CO., LTD.) 06 August 2020 (2020-08-06)<br>entire text | 1-10 |
| P, A | WO 2022/239270 A1 (TOPPAN PRINTING CO., LTD.) 17 November 2022 (2022-11-17)<br>entire text | 1-10 |

Form PCT/ISA/210 (second sheet) (January 2015)

**INTERNATIONAL SEARCH REPORT**
Information on patent family members

International application No.

**PCT/JP2023/023146**

| Patent document cited in search report | | | Publication date (day/month/year) | Patent family member(s) | | | Publication date (day/month/year) |
|---|---|---|---|---|---|---|---|
| KR | 10-2020-0031282 | A | 24 March 2020 | (Family: none) | | | |
| WO | 2021/201105 | A1 | 07 October 2021 | JP | 2022-8024 | A | |
| | | | | JP | 2022-132678 | A | |
| JP | 2017-171794 | A | 28 September 2017 | (Family: none) | | | |
| US | 2016/0152833 | A1 | 02 June 2016 | WO | 2014/198749 | A1 | |
| | | | | EP | 3008144 | A1 | |
| | | | | TW | 201522532 | A | |
| | | | | KR | 10-2016-0019444 | A | |
| | | | | CN | 105431498 | A | |
| US | 6663952 | B1 | 16 December 2003 | WO | 2000/022039 | A1 | |
| | | | | EP | 1119589 | A1 | |
| | | | | DE | 19846659 | A | |
| | | | | CA | 2346779 | A | |
| JP | 2020-111715 | A | 27 July 2020 | (Family: none) | | | |
| WO | 2021/235493 | A1 | 25 November 2021 | CN | 115515789 | A | |
| | | | | KR | 10-2023-0013242 | A | |
| | | | | TW | 202200381 | A | |
| JP | 2021-101090 | A | 08 July 2021 | JP | 2018-3521 | A | |
| JP | 2018-159052 | A | 11 October 2018 | (Family: none) | | | |
| JP | 2016-99671 | A | 30 May 2016 | (Family: none) | | | |
| JP | 2016-150473 | A | 22 August 2016 | (Family: none) | | | |
| JP | 7002032 | B1 | 20 January 2022 | US | 2023/0082532 | A1 | |
| | | | | WO | 2021/172417 | A1 | |
| | | | | CN | 115279598 | A | |
| WO | 2020/158921 | A1 | 06 August 2020 | CN | 113382854 | A | |
| | | | | KR | 10-2021-0124264 | A | |
| WO | 2022/239270 | A1 | 17 November 2022 | EP | 4116095 | A1 | |
| | | | | CN | 115623867 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A